# EUROPEAN PATENT APPLICATION

(11) **EP 4 485 365 A1**
(43) Date of publication of application: **01.01.2025**
(21) Application number: 23182554.8
(22) Date of filing: 30.06.2023
(51) Int. Cl.: G06V 10/141, G06V 10/147, G06V 20/52

(54) **SENSOR ARRANGEMENT FOR DETECTING OBJECTS**

(71) Applicant: Haltian Oy, 90230 Oulu (FI)
(72) Inventor: Sarasmo, Marko, 90230 Oulu (FI)
(74) Representative: Kolster Oy Ab

(57) **Abstract**

An arrangement and a method for detecting objects in a given space is disclosed. The solution comprises projecting (300) a solid angle of surroundings to a sensor surface comprising a light sensitive matrix, gathering (302) background data on the given space based on light intensity on the sensor matrix when no detectable objects are in the given space, detecting (304) changes in light intensity on the sensor surface, comparing (306) the detected changes in the light intensity to the background data and determining (308) detectable objects in the area based on the comparison.

## Description

### FIELD

Various embodiments relate to sensor arrangement for determining and monitoring the number of objects such as people.

### BACKGROUND

There are situations and places where there is a need to detect whether there are people or moving objects in a given area. Sometimes there is a need to determine the number of people on a given area. The need may relate business or safety reasons. For example, a business owner may be interested to know how many customers are visiting the business premises during the day or at a given time of the day. Further, sometimes monitoring the number of people in a given area may relate to determining whether there is congestion, for example queues at checkout. In addition, it may be useful to know when people are gathered around points of interest causing congestion.

In the modern world, privacy is increasingly important. When monitoring people electronically in public and private premises, privacy of the people must be taken into account. Camera-based solutions produce sharp images or video from which people can be recognised. In many cases this may be an unwanted feature.

Thermal cameras have high power consumption and cost. Radar based solutions have high power consumption. Camera-based solutions face privacy issues.

Installing monitoring equipment should be as easy as possible. In some environments, extensive wiring and electricity support for monitoring equipment may be difficult to realize and has high installing cost.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
Figure 1A illustrates an example environment in which detection of objects can be realized;
Figure 1B illustrates an example of the location of an apparatus;
Figure 2 illustrates an example of an apparatus for detecting objects.;
Figure 3 is a flowchart illustrating an embodiment;
Figure 4 is a schematic sideview of an apparatus;
Figures 5A, 5B, 5C and 5D illustrate examples of light sensitive sensor matrix;
Figures 6, 7A, 7B and 7C illustrate examples of possible result of determination; and
Figure 8 illustrates an example of reading a light sensitive sensor matrix.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

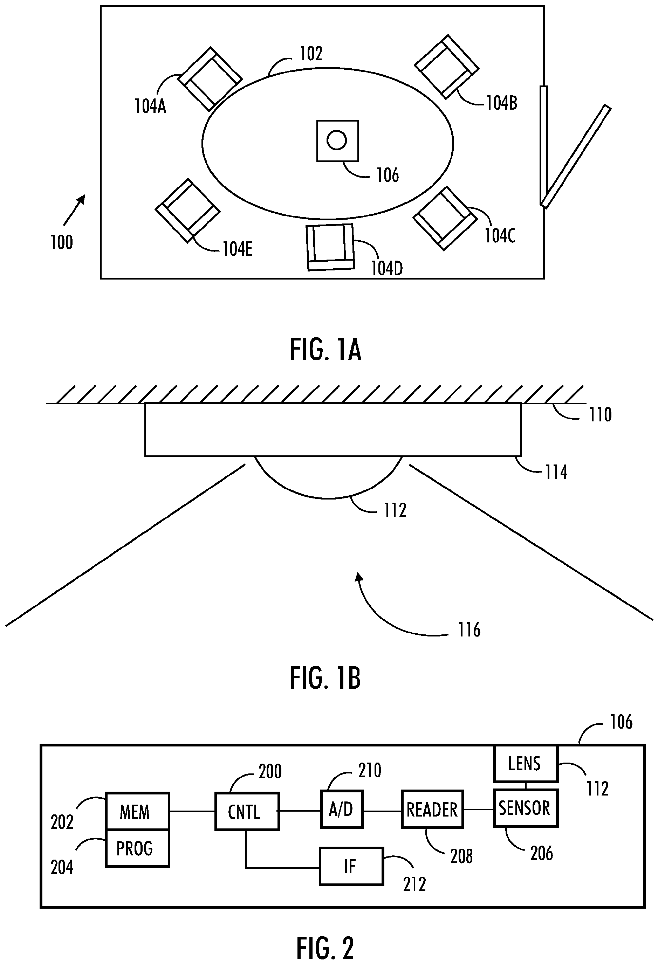

Figure 1A illustrates an example environment 100 in which detection of objects can be realized. The environment is this example is a meeting room with a table 102 and a set of chairs 104A, 104B, 104C, 104D, 104E. The room comprises an apparatus 106 for detecting objects. In an embodiment, the apparatus is located at the ceiling of the room, as illustrated in Figure 1B. The apparatus could be as well located on a wall, for example.

The example environment may as well be a corridor, passageway, a public place or any area where people may be detected. There are many reasons why it may be useful to know if there are people or if people have visited a place. The reasons may relate to safety, business reasons or for maintenance, for example. If the apparatus has detected that a meeting room has been used by many people during the day, cleaning may be required. On the other hand, if the meeting room has been vacant there may be no need for cleaning. Utilising apparatus for detecting people needless cleaning activities may be reduced, for example.

In an embodiment, the apparatus may be utilised for real-time occupancy detection. Further, information provided by the apparatus may be utilised in reservation of a meeting room. The apparatus may provide information whether a meeting room is currently vacant or occupied, for example.

In the example of Figure 1B, the apparatus, located at the ceiling 110 comprises a lens 112 and a housing 114. The lens 112 may be configured to gather light from a solid angle 116 of the surroundings into a sensor surface located the housing 114. A solid angle is the three-dimensional field of view from the lens to the surroundings of the apparatus. In an embodiment, the view captured by the lens may, in planar degrees, be about 160°, for example. The view may also be larger or smaller, depending on the structure of the lens and the apparatus as one skilled in the art is well aware.

Figure 2 illustrates an example of an apparatus 106 for detecting objects. The apparatus of the example comprises a processing unit or a control circuitry 200 configured to control at least part of the operation of the apparatus.

The apparatus may comprise a memory 202 for storing data. Furthermore, the memory may store software 204 executable by the processing unit or control circuitry 200. The memory may be integrated in the processing unit.

The apparatus of the example comprises a sensor surface 206 comprising a light sensitive sensor matrix and a lens or a lens system 112 configured to project a solid angle of the surroundings of the apparatus 106 to the sensor surface 206.

The processing unit or control circuitry 200 is operationally connected to the sensor surface 206. In an embodiment, the apparatus comprises a circuitry 208 configured to read the light sensitive matrix located on the sensor surface 206. In an embodiment, the apparatus comprises an analogue-to-digital converter 210 converting the output of the circuitry 208 to a digital format. In an embodiment, the analogue-to-digital converter may be located in the circuitry 208.

The apparatus may comprise one or more interface circuitries 212. The interface circuitries are operationally connected to the processing unit or control circuitry 200. An interface circuitry may be a transceiver, or a set of transceivers configured to communicate wirelessly with other devices, such as other apparatus or a network monitoring or controlling the apparatus, for example. The interface circuitry may be connected to an antenna arrangement (not shown). The apparatus may also comprise a connection to a transmitter instead of a transceiver.

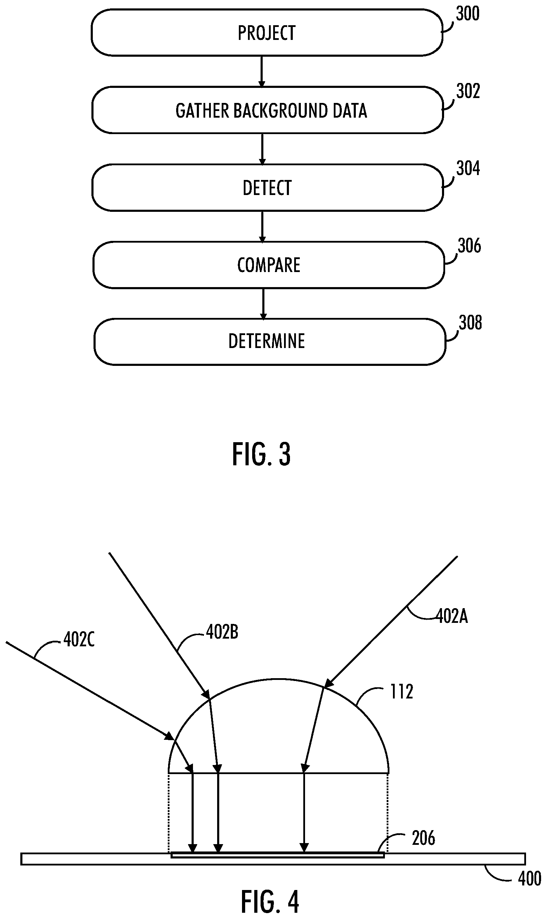

Figure 3 is a flowchart illustrating a method for detecting objects in a given space. In an embodiment, the method is executed by the apparatus of Figures 2 and 4. Figure 4 is a schematic, simplified sideview of the apparatus. The figure shows the lens system 112 of the apparatus, and the sensor surface 206 comprising a light sensitive sensor matrix. In the example of Figure 4 the sensor surface 206 is located on a printed circuit board or printed wiring board 400. In an embodiment, the printed circuit board may also comprise some or all of the other components of the apparatus (processing unit 200, memory 202, circuitry 208, A/D converter 210, interface 212) mentioned in connection with Figure 2.

In step 300, the lens 112 is configured to project a solid angle of surroundings of the apparatus to a sensor surface 206 of the apparatus, the sensor surface comprising a light sensitive sensor matrix. As Figure 4 illustrates, light rays 402A, 402B, 402C arriving from different directions to the lens are projected by the lens system 112 to the sensor surface 206.

In step 302, the processing unit 200 is configured to gather background data on the given space based on light intensity on the sensor matrix when no detectable objects are in the given space. The background data may be gathered at setup time of the apparatus, for example. The background data is captured in a situation where the are on people or other detectable objects in the given area, for example in a meeting room.

In step 304, the processing unit 200 is configured to detect changes in light intensity on the sensor surface.

In an embodiment, processing unit 200 may be configured to upsample the projection on the sensor surface to a higher resolution than provided by the sensor matrix.

In an embodiment, the processing unit 200 is configured to control the reader circuitry 208 to scan the light sensitive matrix of the sensor surface 206 and detect possible changes in light intensity on the sensor surface. The processing unit 200 may be configured to detect changes in the circuitry provided readings related to different parts of the matrix. In an embodiment, the processing unit is configured to read the sensor matrix at a given frequency. The processing unit may further be configured to control the frequency with which the sensor matrix is read.

In step 304, the processing unit 200 is configured to compare the detected changes in the light intensity to the background data. The processing unit 200 may analyse the readings obtained from the circuitry and detect areas where light intensity is changing. The detect changes ae compared to the background data.

In step 306, the processing unit 200 is configured to determine the number of continuous areas.

In step 308, the processing unit 200 is configured to determine detectable objects in the area based on the comparison.

For example, the processing unit may determine the number of detectable objects in the area based on the comparison. In an embodiment, the processing unit may determine the direction of movement of detected objects.

In an embodiment, the processing unit may transmit determined information of the number of objects to other devices, such as other apparatuses or cloud, remote server, edge computer, a network controlling the apparatus, or an external display, for example.

Thus, in an embodiment, the processing unit 200 is configured to scan the sensor matrix and determine constant areas or shapes related to detected light intensity on the sensor matrix. As the lens system 112 projects a solid angle of the surroundings of the apparatus to the sensor matrix, the processing unit 200 may be configured to perform an inverse projection and map the sensor matrix data back to the solid angle of the surroundings.

For example, referring to Figure 1A, a given point in the surroundings, for example the chair 104B, is projected by the lens 112 to a given point in the sensor matrix. When analysing light intensity data obtained from the circuitry 208, the processing unit may be configured to map the light intensity data to the room coordinates.

However, the inverse projection or mapping is an optional feature. Embodiments of the invention may be realised also without the inverse projection.

In an embodiment, the processing unit may be configured to determine moving constant areas or shapes related to detected light intensity on the sensor matrix and interpret these moving shapes as object movement based on the comparison with the background data. The number of objects may be determined.

In an embodiment, the number of objects may be stored. The sensor matrix may be scanned by the circuitry 208 at given time intervals and obtained number of objects may be updated.

In an embodiment, the processing unit 106 may be configured to determine distances between objects based on the comparison with the background data.

In an embodiment, the processing unit 106 may be configured to utilise a machine learning algorithm for determining the number and movement of objects in the monitored area. A known number of objects moving in the area in the area may be utilised as training data for the machine learning algorithm.

In an embodiment, the apparatus may be configured to determine the types of detected objects. For example, based on the changes in the light intensity, the apparatus may be configured to determine that a detected object is human, for example.

In an embodiment, the limits of the given space the apparatus is monitoring may be indicated to the apparatus at setup phase. For example, a light source of given properties may be placed at the corners or limits of the given space to be monitored, and the apparatus may be configured to ignore any data coming outside these limits. Furthermore, some specific places within the given space may be indicated to the apparatus, such as chairs, for example.

In an embodiment, at the setup phase the operation of the apparatus may be tested by placing objects at given location of the given area and check if the apparatus is able to detect the objects.

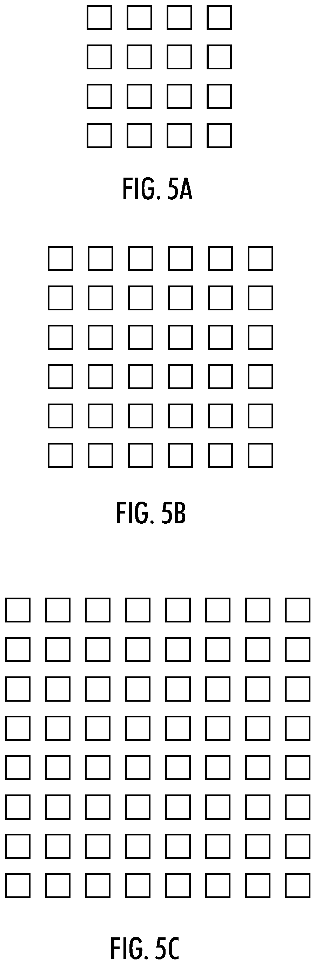

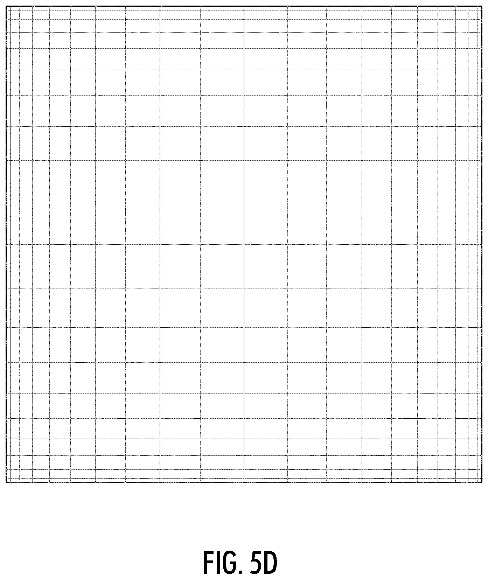

Example of the structure of the light sensitive sensor matrix on the sensor surface are illustrated in Figures 5A, 5B, 5C and 5D.

Figure 5A illustrates a light sensitive sensor matrix of the size 4x4. Figure 5B illustrates a light sensitive sensor matrix of the size 6x6 and Figure 5C illustrates a light sensitive sensor matrix of the size 8x8.

Each element in the matrix may be a light sensitive sensor. Thus, electric properties of the sensor vary as a function of light captured by the sensor. In an embodiment, the sensors may be poly- or monosilicon soler cells, for example. Known solutions for light sensitive sensors may be applied. Printable or flexible solar cells may be used, for example. The advantage of these sensors is that they itself do not consume any electric power. Thus, the sensors enable a low energy realization, which may be battery powered and where the battery replacement may be needed only after one or more years.

Figure 5D illustrates an embodiment where the resolution of the light sensitive sensor matrix is lower in the center of the matrix and greater at the borders. This may improve the accuracy of the apparatus at the borders of the given space. The resolution of the sensor matrix may be designed based on the properties of the lens used in the apparatus. For example, with so called fisheye lenses the imaging performance is best at the center and diminishes towards the border areas. The sensor matrix type of Figure 5D may compensate this effect.

In an embodiment, the shape of the sensor matrix may be circle, rectangular or any other suitable shape.

In an embodiment, the light sensitive matrix on the sensor surface comprises a light sensitive sensor surface, and the circuitry to read the sensor matrix is configured to read the sensor surface at given predetermined points which form a matrix on the surface.

The proposed solution has the advantage that a camera is not utilised and no high-resolution images are produced during the operation of the apparatus. The lens system projects light on a sensor matrix and light intensity can be measured without capturing an image from which objects could be recognized. The proposed solution utilises moving objects which have no visual details due to the low resolution. However, the resolution is high enough to produce moving objects which number may be counted.

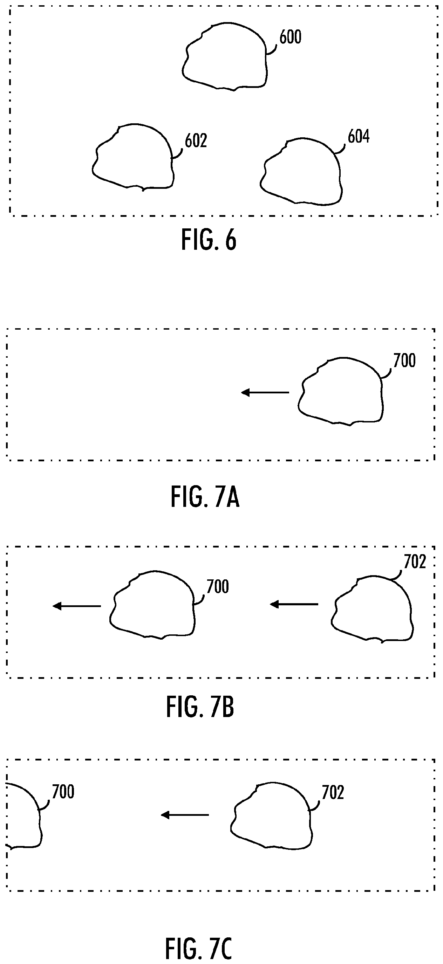

Figure 6 is an example of possible result of determination of the processing unit based on scans performed by the reader circuitry. The processing unit may detect three shapes 600, 602, 604 of constant areas of light intensity in the surroundings of the apparatus. The processing unit may be configured to determine based on the comparison with the background data that there are three objects, such as people, in the area.

Figures 7A, 7B and 7C illustrate another example of possible results of determination of the processing unit based on scans performed by the reader circuitry. At a first time instant the processing unit has instructed the reader circuitry to perform one or more scans and as the result the processing unit determines that there is one shape 700 moving in the area.

At a second time instant the processing unit has instructed the reader circuitry to perform one or more scans and as the result the processing unit determines that there are two shapes 700, 702 moving in the area. Based on the detected movement and the shapes and/or sizes the processing unit may determine that the first shape 700 is the same as at the first time instant and that the second space 702 has entered the area. The processing unit determines that there is one new shape 702 moving in the area in addition to the previously known shape 700.

At a third time instant the processing unit has instructed the reader circuitry to perform one or more scans and as the result the processing unit determines that there still are two shapes 700, 702 moving in the area. Based on the detected movement and the shapes and/or sizes the processing unit may determine that the first shape 700 is exiting the area and the second shape 702 continues to move.

In an embodiment, processing unit may determine that a detected continuous area of changing light intensity is a light source, such as a television, a display or a led, if the light intensity varies according to a regular pattern. In an embodiment, the processing unit may be configured to ignore the areas determined to be a light source when determining the number of objects in the area. In an embodiment, the processing unit may be configured to learn the nature of the light source and detect changes in the light provided by the source.

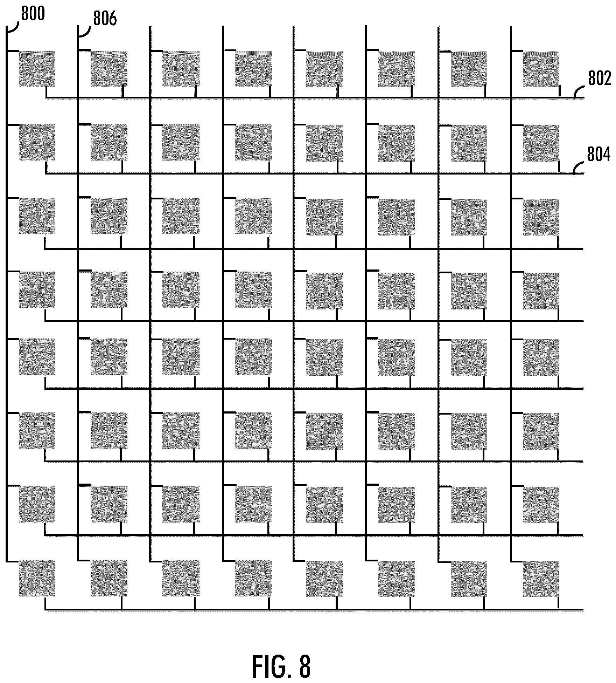

Figure 8 illustrates an example of reading the sensor matrix. The sensor matrix comprises a set of light sensitive sensors, in this example the sensor matrix is of the size 8x8.

In an embodiment, the sensors of the sensor matrix are read by the reader circuitry column by column. For example, the first column 800 is grounded by the circuitry and the sensors of the first column are read one by one, starting from the first line 802 and then continuing from the second line 804 and so on.

When the sensor of the first column have been read, the second column 806 is selected and the sensors of the second column are read one by one.

When all columns have been reads, the process may be repeated. The frequency with which the sensors are read may be adjusted by the processing unit.

The presented system provides many advantages. For example, the light sensitive matrix does not consume power. The electronics may be built utilising low energy components and the transmission of the result of the determination may be realised with low energy communication. The apparatus may be battery-powered, and the lifetime of the battery may be several years. Further, as the apparatus does not take during operation any images privacy issues are of no concern. The optical data produces only moving objects. In an embodiment, the operation of the apparatus can be maintained, for example in a reduced energy consumption mode or, if need be, in a sleep mode. Further, the cost of the apparatus is low, as the prices of the light sensitive matrix and other components of the apparatus are low.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

**1.** An apparatus for detecting objects in a given space, comprising
a sensor surface comprising a light sensitive sensor matrix,
a lens projecting a solid angle of the surroundings of the apparatus to the sensor surface,
and a processing unit operationally connected to the sensor and a memory including instructions, the instructions, when executed by the processing unit, cause the apparatus to:
gather background data on the given space based on light intensity on the sensor matrix when no detectable objects are in the given space;
detect changes in light intensity on the sensor surface;
compare the detected changes in the light intensity to the background data;
determine detectable objects in the area based on the comparison.

**2.** The apparatus of claim 1, the processing unit (106) being configured to determine the number of detectable objects in the area based on the comparison.

**2.** The apparatus of any preceding claim, further comprising a circuitry operationally connected to the processing unit to read the sensor matrix at a given frequency, the processing unit being configured to control the frequency with which the sensor matrix is read.

**4.** The apparatus of any preceding claim, the processing unit being configured to control the circuitry to perform more than one reading of the sensor matrix before determining whether detectable objects are in the area.

**5.** The apparatus of any preceding claim, the processing unit (106) being configured to
determine that a continuous area of changing light intensity is a light source, if the light intensity varies according to a regular pattern,
take light sources into account ignore the areas determined to be a light source when determining the number of objects in the area.

**6.** The apparatus of any preceding claim, wherein the light sensitive matrix on the sensor surface is comprised of a set of separate sensors.

**7.** The apparatus of any preceding claim 1 to 5, wherein the light sensitive matrix on the sensor surface comprises a light sensitive sensor surface, and the circuitry to read the sensor matrix is configured to read the sensor surface at given predetermined points forming a matrix on the surface.

**8.** The apparatus of any preceding claim, the processing unit (106) being configured to track the movement of detected objects based on the comparison.

**9.** The apparatus of any preceding claim, the processing unit (106) being configured to determine distances between objects based on the comparison.

**10.** The apparatus of any preceding claim, the processing unit (106) being configured to utilise a machine learning algorithm for determining the number and movement of objects in the area, the machine learning algorithm being trained by data obtained with a known number of objects.

**11.** The apparatus of any preceding claim, the processing unit (106) being configured to determine the number of objects in the given area at given time intervals.

**12.** A method for detecting objects in a given space, the method comprising
projecting a solid angle of surroundings to a sensor surface comprising a light sensitive matrix,
gathering background data on the given space based on light intensity on the sensor matrix when no detectable objects are in the given space;
detecting changes in light intensity on the sensor surface;
comparing the detected changes in the light intensity to the background data;
determining detectable objects in the area based on the comparison.

**13.** The method of claim 12, further comprising: determining the number and/or direction of movement of detectable objects in the area based on the comparison.

**14.** The method of claim 12 or 13, further comprising: performing more than one reading of the sensor matrix before determining whether detectable objects are in the area.
